Europäisches Patentamt

European Patent Office

Office européen des brevets

(19)

(11) Publication number: **0 128 973**
**B1**

# (12) EUROPEAN PATENT SPECIFICATION

(45) Date of publication of patent specification: **08.04.87**

(51) Int. Cl.⁴: **B 65 D 88/66, F 16 J 15/52**

(21) Application number: **83109886.8**

(22) Date of filing: **04.10.83**

(54) Flexible sleeve for bin activator.

(30) Priority: **21.06.83 US 506381**

(43) Date of publication of application:
**27.12.84 Bulletin 84/52**

(45) Publication of the grant of the patent:
**08.04.87 Bulletin 87/15**

(84) Designated Contracting States:
**AT BE DE FR IT LU NL SE**

(56) References cited:
**DE-A-3 008 109**
**DE-B-1 525 573**
**US-A-3 261 508**
**US-A-3 722 747**

(73) Proprietor: **Wahl, Richard C.**
**66 Holton Lane**
**Essex Falls New Jersey (US)**
(73) Proprietor: **Wahl, Eugene R.**
**40 Lynwood Road**
**Cedar Grove New Jersey (US)**

(72) Inventor: **Wahl, Richard C.**
**66 Holton Lane**
**Essex Falls New Jersey (US)**
Inventor: **Wahl, Eugene R.**
**40 Lynwood Road**
**Cedar Grove New Jersey (US)**

(74) Representative: **Berkenfeld, Helmut, Dipl.-Ing.**
**An der Schanz 2**
**D-5000 Köln 60 (DE)**

Courier Press, Leamington Spa, England.

## Description

Generally, this invention relates to bin activator apparatus adapted for attachment to a storage bin or hopper to promote a positive flow of material therefrom. In particular, it relates to a sealing sleeve assembly for sealing the gap between a cylindrical flange on the bottom of a storage bin and similar diameter cylindrical flange on the upper end of a bin activator comprising a flexible sleeve of generally cylindrical shape having a diameter and an axial length such to closely overlie the bin and the bin activator flanges and span the gap therebetween, and at least one clamp band on said sleeve to fasten same in position on said flanges.

The design of storage bins, per se, has been the subject of extensive and thorough research, both mathematical and empirical. However, experts in this field have found that in spite of the best bin designs, a dependable outflow of the material cannot be obtained without the use of auxiliary devices operatively associated with the bin.

One apparatus which has had marked commercial success in meeting the above-described bin discharge problem is described in U.S. Patent 3,261,508 for a Vibrating Bin Activator. This apparatus overcomes the shortcomings of the prior art devices. The apparatus is adapted for attachment to the bottom of a storage bin. Such apparatus is subjected to vigorous vibration and accomplishes the task of removing a wide variety of materials from bins in a controlled manner. That novel apparatus was designed for attachment to the bottom of a storage bin having a discharge opening in its bottom, being broadly depicted in Figure 3 of the patent. It comprises a material receiving means having concave side walls terminating in an outlet opening, means for forming an annular opening defining a flow path for material dropping from the bin into the material receiving means, means for imparting cyclic vibrations to the receiving means and means for securing the vibratory apparatus in operative association with the hopper.

As will be better seen in Figure 4 of the U.S. Patent, a necessary horizontal gap or opening is provided between the lower end of the bin and the vibratory activator, by the appropriate spacing of vertical tie rods. The suspension of the hopper activator from the bin with the associated vibration isolators permits relatively free vibration in response to the cyclic thrust forces applied to the hopper by the eccentrically mounted weight of the gyrator assembly. A clamp band made of a flexible material is provided to close this gap between the lower end of the bin and the bin activator. Metal straps are provided in turn to fasten the clamp band on the flanges of the bin and the bin activator. These metal straps only extend along and over the exterior surface of the clamp band. They are only fastened in position to also fasten the clamp band in position by use of tightening devices, such as a turn-buckle. When replacement or repair becomes necessary, the clamp band and the metal straps must be manually held until the turn-buckle is actuated.

The use of a resilient sealing ring between the bottom flange of a bin and the top flange of a bin activator is further known from German Patent Specification 3 008 109. This sealing ring closes the gap between the two flanges. Cords of cylindrical cross-section are provided to fasten the sealing ring in position. However, it is not clear from the Patent Specification how they work.

In bin dischargers or activators of the type as stated above, the flexible sleeve spanning the gap between the lower end of the bin and the bin activator has to be replaced at regular intervals. Bin activators can have a diameter of up to 4.20 or 4.80 meters. Due to these dimensions and the weight of the flexible sleeve, the clamping band and the tightening means, the prior art assemblies require the use of several people to hold the clamping band and the tightening means in position while they are being fastened around the sleeve.

Proceeding from this prior art, it is the underlying objective of the invention to provide a sealing sleeve assembly, where the sleeve can be installed or replaced effectively by one worker only. The solution to this objective is provided by the invention by a structure which is characterized in that upper and lower pairs of laterally extending circumferential ribs defining therebetween upper and lower channels respectively are formed at the top and bottom ends of said sleeve, each of said channels has straight parallel sides extending at right angles to the sleeve, in that upper and lower clamp bands are received within said upper and lower channels respectively, to securely clamp said sleeve to the cylindrical flanges of said storage bin and bin activator, said clamp bands having a width substantially equal to the width of said channels and a thickness less than the depth of said channels so that while the sealing sleeve is secured to the cylindrical flanges said clamp bands are frictionally retained within said channels and in that said upper and lower channels are spaced apart a distance greater than said gap between the storage bin cylindrical flange and the bin activator cylindrical flange spanned by said sealing sleeve.

When a sleeve of this assembly according to the invention requires replacement, the sleeve can readily be positioned about the lower cylindrical flange of the bin and upper cylindrical flange of the bin activator and will remain in this position by friction while the clamp bands are placed about the sleeve to securely lock the sleeve in position, and the clamp bands are in turn held in position since they are securely received within the upper and lower channel respectively. In view of the relationship between the dimensions of the clamp bands on the one hand and the channels on the other hand, the clamp bands are held in the channels even when not yet tightened. The clamp bands are also frictionally retained during installation of the sleeve. All this enables that one worker only is sufficient to effect replacement of a sleeve. The spacing apart of the upper and the lower channels a distance greater than the gap between the flange of the storage bin and the flange of the bin activator provides for position of the clamping bands on said flanges so that the sleeve is retained in operating position even through repeated vibratory cycles.

Advantageous embodiments of the invention form the subject matter of subclaims.

Description of the Drawings

In the drawings, like reference numbers denote like components of the apparatus.

Figure 1 is a fragmentary view of a bin hopper and cooperating vibratory apparatus, showing in elevation and full section one lower quadrant of the assembly.

Figure 2 is an elevational view in full vertical section of the configuration of the flanges, the sealing sleeve and retaining clamps.

Figure 3 is a perspective view of a portion of the deformable sleeve of this invention which surrounds the spacing in the flanges.

Figure 4 is a partial perspective view of the clamp band and adjustable bolt used to retain the sleeve in operating position.

Detailed Description of the Invention

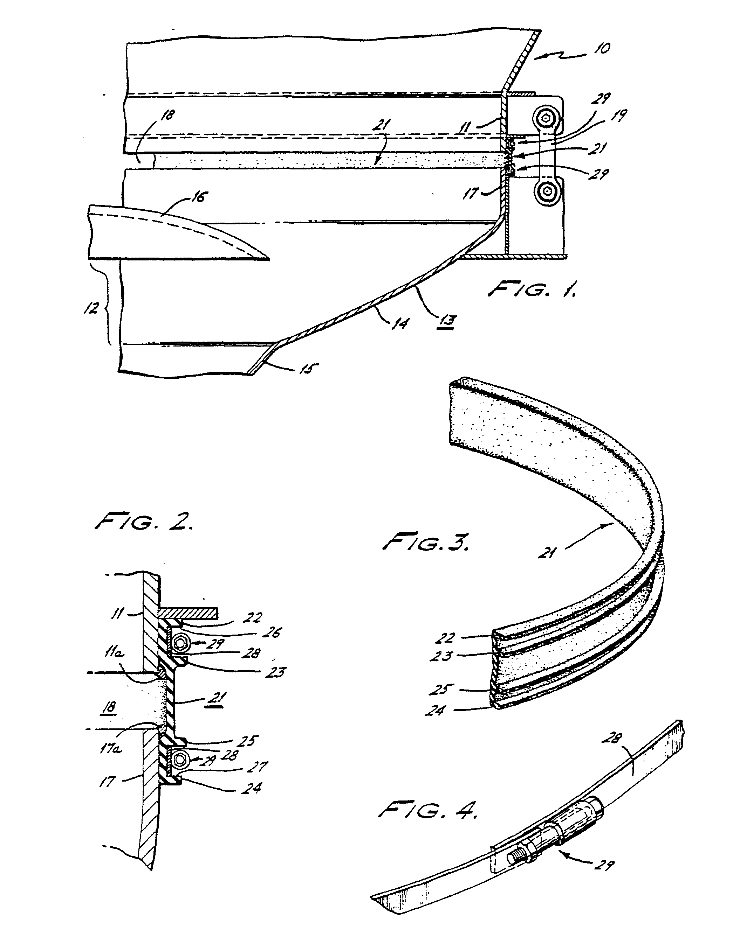

In Figure 1, there is shown the bottom inwardly tapered conical portion 10 of a large storage bin, which portion 10 terminates in a cylindrical annular flange 11. To control and promote flow from the bin, a bin activator 12, such as described in the aforementioned Wahl '508 patent, is provided. This bin activator 12 includes a material receiving member 13 having shallow and steeper concave sections 14 and 15, respectively. A baffle 16 is supported within the material receiving member and the entire bin activator is vibrated by a conventional vibrator, not shown. The upper end of the material receiving member 13 terminates in an upwardly extending cylindrical flange 17 of a diameter equal to that of the bin flange 11 and is axially spaced from the bin flange to provide a narrow uniform gap 18 therebetween. A series of circumferentially spaced hanger arms 19 suspend the bin activator from the storage bin to permit limited horizontal movement of the bin activator when the vibrator is operating.

In accordance with the present invention, a flexible sleeve 21 is provided to be secured to the flanges 11 and 17 of the bin and bin activator, respectively, and close the gap 18 between these two flanges for the purpose of preventing material leakage through this gap and invasion of moisture into the material within the bin. This sleeve preferably is formed of a gas impervious, elastomeric compound and may be reinforced with one or more layers of fabric.

As shown in Figure 2, the sleeve is positioned to span and seal the gap 18 with approximately equal extents of the sleeve 21 engaging the bin flange 11 and the bin activator flange 17. To additionally assist in maintaining the sleeve in place, annular metallic wires or beads 11a and 17a may be welded or otherwise secured about the entire periphery of the terminal ends of the flanges 11 and 17, respectively.

An important feature of the present invention is the provision of upper and lower pairs of outwardly extending flanges with the upper pair comprising an upper flange and upper intermediate flange 22 and 23, respectively, and the lower pair comprising a lower flange and lower intermediate flange 24 and 25, respectively. The upper and lower intermediate flanges are positioned so that when the sleeve is installed, the upper intermediate flange 23 is positioned above the bin flange bead 11a and the lower intermediate flange 25 is positioned immediately below the bin activator flange bead 17a.

The flanges of each pair are spaced to form upper and lower channels 26 and 27, respectively, extending about the exterior of the sleeve, which are dimensioned to receive, when the sleeve is installed, adjustable metallic clamp bands 28. The provision of these upper and lower pairs of flanges in the sleeve serves a dual function. First, they rigidify that portion of the sleeve which engages the flanges 11 and 17, respectively, immediately above and below the flange beads so that when the clamps are tightened, as shown in Figure 2, they resist relative axial movement of the sleeve with respect to the flanges. In addition, the flanges serve the function of permitting relatively easy installation of the sleeve by one workman. Bin activators of the type disclosed herein may be as large as 12 to 14 feet in diameter and it is necessary to place single lengths of the clamping band entirely about the upper and lower portions of the sleeve. The recesses provided by the sleeve flanges permit easy installation of these clamping bands and hold the bands in position while they are being stretched around the sleeve and tightened. After the sleeves are placed in position, they are firmly clamped around the sleeves within the recesses 26 and 27 by means of an adjustable clamping member such as shown at 29 in Figure 4.

While a particular embodiment of the present invention has been illustrated and described herein, it is not intended to limit the invention to such a disclosure, and changes and modifications may be incorporated therein within the scope of the following claims.

**Claims**

1. Sealing sleeve assembly for sealing the gap (18) between a cylindrical flange (11) on the bottom of a storage bin and similar diameter cylindrical flange (17) on the upper end of a bin activator (12) comprising a flexible sleeve (21) of generally cylindrical shape having a diameter and an axial length such to closely overlie the bin and the bin activator flanges (11, 17) and span the gap (18) therebetween, and at least one clamp band (28) on said sleeve (21) to fasten same in position on said flanges (11, 17), characterized in that upper and lower pairs of laterally extending circumferential ribs (22, 23; 24, 25) defining therebetween upper and lower channels (26, 27) respectively are formed at the top and bottom ends of said sleve (21), each of said channels (26, 27) has straight parallel sides extending at right angles to the sleeve (21), in that upper and lower clamp bands (28) are received within said upper and lower channels (26, 27) respectively, to securely clamp said sleeve (21) to the cylindrical flanges (11, 17) of said storage bin and bin activator (12), said clamp bands (28) having a width substantially equal to the width of said channels (26, 27) and a thickness less than the depth of said channels (26, 27) so that while the sealing sleeve (21) is secured to the cylindrical flanges (11, 17) said clamp beads (28) are frictionally retained within said channels (26, 27) and in that said upper and lower channels (26, 27) are spaced apart a distance greater than said gap (18) between the storage bin cylindrical flange (11) and the bin activator cylindrical flange (17) spanned by said sealing sleeve (21).

2. Sealing sleeve assembly in accordance with claim 1, characterized in that said cylindrical flanges (11, 17) have a wire bead (11a, 17a) secured to their outer surfaces adjacent their terminal ends, and that said upper channel (26) is positioned about the storage bin cylindrical flange (11) above the wire bead (11a) thereon and said lower channel (27) is positioned about the bin activator cylindrical flange (17) below the wire bead (17a) thereon.

3. Sealing sleeve assembly in accordance with claim 1, characterized in that adjusting means (29) are provided on each of said clamp bands (28) to permit tightening of said bands (28) about said sleeve (21).

4. Sealing sleeve assembly in accordance with claim 1, characterized in that said flexible sleeve (21) is formed of a gas impervious elastomeric material.

**Patentansprüche**

1. Abdichtmanschettenanordnung zum Abdichten des Spaltes (18) zwischen einem zylindrischen Flansch (11) am Boden eines Vorratsbunkers und einem einen ähnlichen Durchmesser aufweisenden zylindrischen Flansch (17) am oberen Ende eines Bunkeraktivators (12) aus einer flexiblen Manschette (21) von allgemain zylinderförmiger Gestalt mit einem Durchmesser und einer axialen Länge derart, daß sie eng über dem Bunker und den Flanschen (11, 17) des Bunkeraktivators liegt und den zwischen diesen befindlichen Spalt (18) überbrückt, und mit mindestens einem Klemmband (28) auf der Manschette (21), um diese auf den Flanschen (11, 17) in ihrer Lage zu halten, dadurch gekennzeichnet, daß ein oberes und ein unteres Paar von seitlich verlaufenden Umfangsrippen (22, 23; 24, 25), die zwischen sich obere und untere Aussparungen (26, 27) begrenzen, am oberen und am unteren Ende der Manschette (21) ausgebildet sind, jede Aussparung (26, 27) unter rechten Winkeln zu der Manschette (21) verlaufende, gerade parallele Seiten aufweist, daß obere und untere Klemmbänder (28) in der oberen und der unteren Aussparung (26, 27) aufgenommen sind, um die Manschette (21) auf den zylindrischen Flanschen (11, 17) des Vorratsbunkers und des Bunkeraktivators (12) sicher zu verklemmen, daß die Klemmbänder (28) eine Breite im wesentlichen gleich der Breite der Aussparungen (26, 27) und eine Stärke von weniger als der Tiefe der Aussparungen (26, 27) aufweisen, so daß während einer Befestigung der Abdichtmanschette (21) auf den zylindrischen Flanschen (11, 17) die Klemmbänder (28) durch Reibung in den Aussparungen (26, 27) zurückgehalten werden, und daß die obere und die untere Aussparung (26, 27) um einen Abstand auseinanderliegen, der größer als der durch die Abdichtmanschette überbrückte Spalt (18) zwischen dem zylindrischen Flansch (11) des Vorratsbunkers und dem zylindrischen Flansch (17) des Bunkeraktivators ist.

2. Abdichtmanschettenanordnung nach Anspruch 1, dadurch gekennzeichnet, daß die zylindrischen Flansche (11, 17) einen an ihren Außenflächen neben ihren Außenenden befestigten Drahtwulst (11a, 17a) aufweisen, und daß die obere Aussparung (26) den zylindrischen Flansch (11) des Vorratsbunkers umschließend oberhalb des Drahtwulstes (11a) an diesem angeordnet ist, und die untere Aussparung (27) den zylindrischen Flansch (17) des Bunkeraktivators umschließend unterhalb des Drahtwulstes (17a) an diesem angeordnet is.

3. Abdichtmanschettenanordnung nach Anspruch 1, dadurch gekennzeichnet, daß auf jedem Klemmband (28) Einstellmittel (29) zum Ermöglichen eines Spannes der Bänder (28) auf der Manschette (21) vorgesehen sind.

4. Abdichtmanschettenanordnung nach Anspruch 1, dadurch gekennzeichnet, daß die flexible Manschette (21) aus einem gasundurchlässigen elastomeren Werkstoff hergestellt ist.

**Revendications**

1. Dispositif à manchette d'étanchéité destiné à rendre étanche l'intervalle (18) entre un bord cylindrique (11) sur la base d'une trémie de stockage et un bord cylindrique (17) de diamètre semblable sur l'extrémité supérieure d'un activateur de trémie (12) comprenant une manchette flexible (21) de forme dans l'ensemble cylindrique ayant un diamètre et une longueur axiale tels qu'elle s'applique étroitement contre les bords de la trémie et de l'activateur de trémie (11, 17) et ponte l'intervalle (18) qui les sépare, et au moins un collier de serrage (28) sur la manchette (21) pour la fixer en place sur les bords (11, 17) caractérisé en ce que des paires supérieure et inférieure de nervures circonférentielles s'étendant latéralement (22, 23, 24, 25) définissant entre elles des gorges supérieure et inférieure (26, 27) respectivement sont formées aux extrémités supérieure et inférieure de la manchette (21), chacune des gorges (26, 27) comportant des côtés parallèles droits qui s'étendent perpendiculairement à la manchette (21), en ce que des colliers de serrage supérieur et inférieur (28) sont reçus dans les gorges supérieure et inférieure (26, 27) respectivement pour fixer solidement la manchette (21) aux bords cylindriques (11, 17) de la trémie de stockage et de l'activateur de trémie (12), les colliers de serrage (28) ayant une largeur en substance égale à la largeur des gorges (26, 27) et une épaisseur inférieure à la profondeur des gorges (26, 27), de sorte que pendant que la manchette d'étanchéité (21) est fixée aux bords cylindriques (11, 17), les colliers de serrage (28) sont retenus par friction dans les gorges (26, 27) et en ce que les gorges supérieure et inférieure (26, 27) sont espacées d'une distance supérieure à la dimension de l'intervalle (18) entre le bord cylindrique (11) de la trémie de stockage et le bord cylindrique (17) de l'activateur de trémie, ponté par la manchette d'étanchéité (21).

2. Dispositif à manchette d'étanchéité suivant la revendication 1, caractérisé en ce que les bords cylindriques (11, 17) comportent un cordon en fil métallique (11a, 17a) fixé à leurs surfaces externes près de leurs extrémités terminales et que la gorge supérieure (26a) est disposée autour du bord cylindrique (11) de la trémie de stockage au-dessus du cordon métallique (11a) appliqué sur ce bord et la gorge inférieure (27) est placée autour du bord cylindrique (17) de l'activateur de trémie en dessous du cordon métallique (17a) appliqué sur ce bord.

3. Dispositif à manchette d'étanchéité suivant la revendication 1, caractérisé en ce que des moyens de réglage (29) sont prévus sur chacun des colliers de serrage (28) pour permettre de tendre les colliers (28) autour de la manchette (21).

4. Dispositif à manchette d'étanchéité suivant la revendication 1, caractérisé en ce que la manchette flexible (21) est faite d'une matière élastomère imperméable aux gaz.

0 128 973

FIG. 1.

FIG. 2.

FIG. 3.

FIG. 4.

1